# EUROPEAN PATENT APPLICATION

(11) **EP 1 261 110 A1**
(43) Date of publication of application: **27.11.2002**
(21) Application number: 01112588.7
(22) Date of filing: 23.05.2001
(51) Int. Cl.: H02K 15/02, B21D 28/22

(54) **Apparatus and method for fabricating stator core of alternator for vehicle**

(71) Applicant: Valeo Mando Electrical Systems Korea Limited, Kyongju-si, Kyongsangbuk-do (KR)
(72) Inventor: Lee, Dong-Han, Kyongsangbuk-do, 780-190 (KR)
(74) Representative: TER MEER STEINMEISTER & PARTNER GbR

(57) **Abstract**

The present invention relates to an apparatus and method for fabricating a stator core of an alternator for a vehicle which are capable of decreasing an initial width of a material by forming a position hole capable of fixing the position based on two steps, decreasing a loss width of the material which is finally removed and enhancing a productivity by decreasing the number of the fabrication processes of the stator core. The apparatus for fabricating a stator core of an alternator for a vehicle includes upper and lower position hole punches (3a,3a') formed in such a manner that the position hole formation mold (3) forms three position holes at both sides of the material, and upper and lower side cutting punches (6a,6a') formed in such a manner that the side cutting mold (6) forms six position holes at a regular interval between three position holes.

## Description

### BACKGROUND OF THE INVENTION

### 1. Field of the Invention

The present invention relates to an apparatus and method for fabricating a stator core of an alternator for a vehicle, and in particular to an apparatus and method for fabricating a stator core of an alternator for a vehicle capable of enhancing a productivity of product by decreasing a width of a material required at an initial stage of a fabrication in a state that a position hole formed at both sides of a material is not formed in a circle shape, a loss and the number of fabrication processes.

### 2. Description of the Background Art

Generally, a vehicle alternator(alternating current generator) is formed of a stator, a rotor and a diode. When an ignition switch is turned on, a current of a battery is flown to a rotor coil through a voltage regulator for thereby forming a magnetic force line. When the engine is started, and the rotor is rotated, a power generating operation is performed in the stator coil for thereby generating a three-phase alternating current. The thusly generated three-phase alternating current is wave-rectified by a diode. If the voltage of a terminal B is higher than the voltage of the battery, the battery is charged, and the current is supplied to each load.

Here, the stator includes a rotor formed of a stator core. The stator core includes slots formed in a radial direction at an outer circumferential portion, and an insulation member is inserted into the slot for thereby preventing interference with respect to a coil and is formed in such a manner that a plurality of circular steel plates are stacked. The stator core is fabricated based on a progressive mold by continuous fabrication steps using a strip shaped material having a certain width.

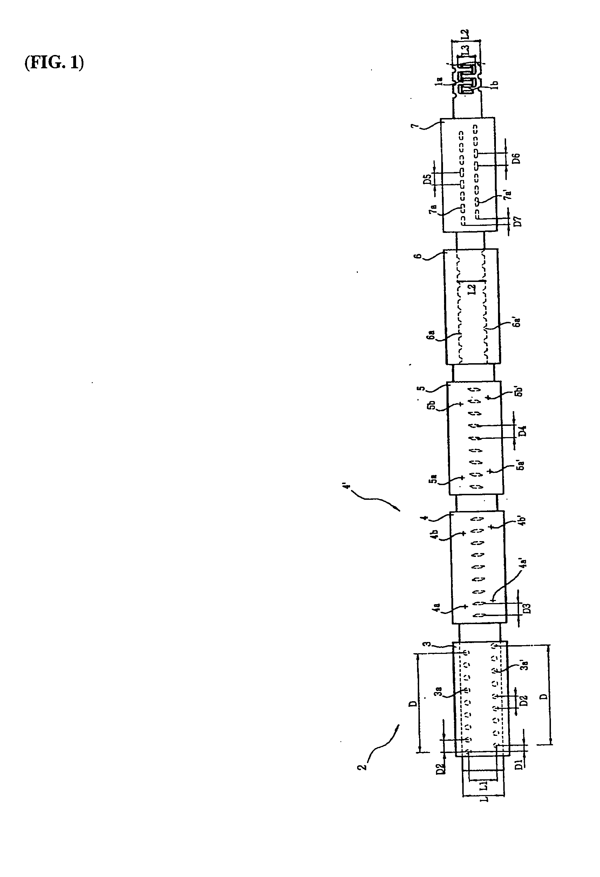

As shown in Figure 1, a progressive mold apparatus 2 is fabricated by processing a material 1 based on a transfer step of a material 1 having a certain initial width L.

The progressive mold apparatus 2 includes a position hole formation mold 3 having plurality of upper and lower position hole punches 3a and 3a' for forming each position hole by dividing both side portions of the material 1 into an upper and lower portion, and a first blank formation mold 4' which forms a rectangular blank vertical to the material 1 transferred through the position hole formation mold 3. The first blank formation mold 4' includes a first blank mold 4 having upper and lower pilot pins 4a, 4b, 4a' and 4b' for being inserted into upper and lower position holes of the material 1 and a left blank punch 4c which forms a rectangular blank in an inner side of the material 1, and a second blank mold 5 having upper and lower pilot pins 5a, 5b, 5a' and 5b' for being inserted into upper and lower position holes of the material transferred through the first blank mold 4 and a right blank punch 5c which forms a rectangular blank vertical between the blanks formed by the left blank punch 4c of the first blank mold 4.

In addition, A side cutting mold 6 includes upper and lower side cutting punches 6a and 6a' for removing side portions of the material 1 extended through the second blank mold 5 of the first blank formation mold 4'. A second blank formation mold 7 includes upper and lower blank formation punches 7a and 7a' for forming a blank between the upper and lower portions of the vertical blanks formed in the material 1 extended through the side cutting mold 6. Here, the upper and lower position hole punches 3a and 3a' of the position hole formation mold 3 of the progressive mold apparatus 2 include a position hole having a certain initial width L with respect to the position hole width L1 of the material 1. Each punch which forms the upper and lower position hole punches 3a and 3a' is formed by dividing a position hole distance D, about 90mm, one pitch, into nine portions at the same position hole distance D2. At this time, the lower position hole punch 3a' is formed at an eccentric distance D1 compared to the upper position hole punches 3a and 3a'.

In addition, the pilot pins 4a, 4b, 4a', 4b', 5a, 5b, 5a' and 5b' are formed in the positions inserted into certain two position holes among a plurality of position holes of the material 1. The left and right blank punches 4c and 5c form nine blanks based on the first and second blank distances D3 and D4. The above described blank is formed in such a manner that the second punching distance D4 is positioned between the first punch punching distances D3.

In addition, the upper and lower side cutting punches 6a and 6a' of the side cutting mold 6 remove side portion widths L1-L2 of the material 1 for thereby obtaining a last width L2 smaller than the position hole width L1 which is a distance to the center portion of the position hole formed at both sides.

The upper and lower blank formation punches 7a and 7a' of the second blank formation mold 7 form a blank based on the same second blank distances D5 and D6 with respect to the upper and lower portions between the vertical blanks formed in the first blank formation mold 4'. The lower blank formation punch 7a' is formed at an eccentric distance D7 compared to the upper blank formation punch 7a.

When the material 1 having an initial width L is transferred to the progressive mold apparatus 2, in a first step, nine position holes are formed at an eccentric distance D1 with respect to the upper and lower portions of both sides by the upper and lower position hole punches 3a and 3a' based on the position hole width L1 through the position hole formation mold 3. In a second step, the material 1 is positioned in the first blank mold 4 of the first blank formation mold 4', and the pilot pins 4a, 4b, 4a' and 4b' inserted into the position holes are fixed, and nine blanks are formed based on the left blank punch 4c. In a third step, the material 1 is positioned in the second blank mold 5 and is fixed by the pilot pins 5a, 6b, 5a' and 5b' inserted into the position holes, and nine vertical blanks are formed between the blanks formed by the first blank mold 4 based on the right blank punch 5c. In a fourth step, both sides of the material have a last width L2 based on the upper and lower side cutting punches 6a and 6a' of the side cutting mold 6. In a fifth step, the blanks are formed in the upper and lower portions based on an eccentric distance D7 and a separation width L3 with respect to the upper and lower portions of the vertical blanks formed in the second and third steps for thereby fabricating first finished products 1a and 1b.

As shown in Figure 2, in the first and second finished products 1a and 1b, the eccentric distances D1 and D7 are defined at a portion which is 1/2 of the first and second blank intervals D3, D4, D5 and D6. The first blank distances D3 and D4 are formed in left and right portions with respect to the center of the position hole. The second blank intervals D5 and D6 are formed between the position holes.

The initial width L of the material 1 is 26.2mm, and the position hole width L1 is 20.0mm, and the last width L2 is 18.8mm.

The progressive mold apparatus 2 capable of forming a continuous blank with respect to the material 1 having a certain width, cutting the same and fabricating a stator core requires an accurate position based on each step. Therefore, the position hole is formed in both sides of the material 1, and almost portions of the same in which the position hole is formed are removed by a certain step. Therefore, the loss of the material is about 7.4mm(26.2mm(L)-18.8mm(L2). Therefore, when forming the position hole in both sides for one stator core, minimum 28.2% of the material is lost for thereby increasing a fabrication cost of the product.

### SUMMARY OF THE INVENTION

Accordingly, it is an object of the present invention to provide an apparatus and method for fabricating a stator core of an alternator for a vehicle which overcome the problems encountered in the conventional art.

It is another object of the present invention to provide an apparatus and method for fabricating a stator core of an alternator for a vehicle which are capable of decreasing an initial width of a material by forming a position hole capable of fixing the position based on two steps, decreasing a loss width of the material which is finally removed and enhancing a productivity by decreasing the number of the fabrication processes of the stator core.

To achieve the above objects, there is provided an apparatus for fabricating a stator core of an alternator for a vehicle which includes upper and lower position hole punches formed in such a manner that the position hole formation mold forms three position holes at both sides of the material, and upper and lower side cutting punches formed in such a manner that the side cutting mold forms six position holes at a regular interval between three position holes in an apparatus for fabricating a stator core of an alternator for a vehicle which includes a progressive mold apparatus formed of a position hole formation mold for forming a position hole at both sides of a material, a first blank formation mold for forming a vertical blank in the material transferred from the position hole formation mold, a side cutting mold for removing both sides of the material transferred from the first blank formation mold and a second blank formation mold for fabricating a finished product by forming a horizontal blank in an upper and lower portions of the material transferred from the side cutting mold.

To achieve the above objects, there is provided a method for fabricating a stator core of an alternator for a vehicle which includes a first step in which a material having an initial width L is transferred to a progressive mold apparatus and moves to a position hole formation mold, and three position holes are formed in the upper and lower portions of both sides by punches based on a position hole width L1' at a sub-position hole distance Dh based on an eccentric distance D1', a second step in which the material is positioned at the first blank mold of the first blank formation mold and is fixed by pilot pins inserted into the position holes for thereby forming eighteen blanks based on the left and right blank punch, a third step in which the initial width L'-last width L2' which is a side distance is removed in such a manner that both sides of the material have a last width L2' based on the upper and lower cutting punches of the side cutting mold for thereby forming three holes at the same position hole distance D2' between the sub-position hole distance Dh, so that nine position holes are formed at the position hole distance D', and a fourth step in which blanks are formed in the upper and lower portions of the vertical blank formed in the second step based on an eccentric distance D7' and a separation width L3', and first and second finished products are fabricated in a state that the width of the material is removed from the initial width L' by the last width L2'.

### BRIEF DESCRIPTION OF THE DRAWINGS

The present invention will become better understood with reference to the accompanying drawings which are given only by way of illustration and thus are not limitative of the present invention, wherein:
Figure 1 is a view illustrating an apparatus for fabricating a stator core of an alternator for a vehicle in the conventional art;

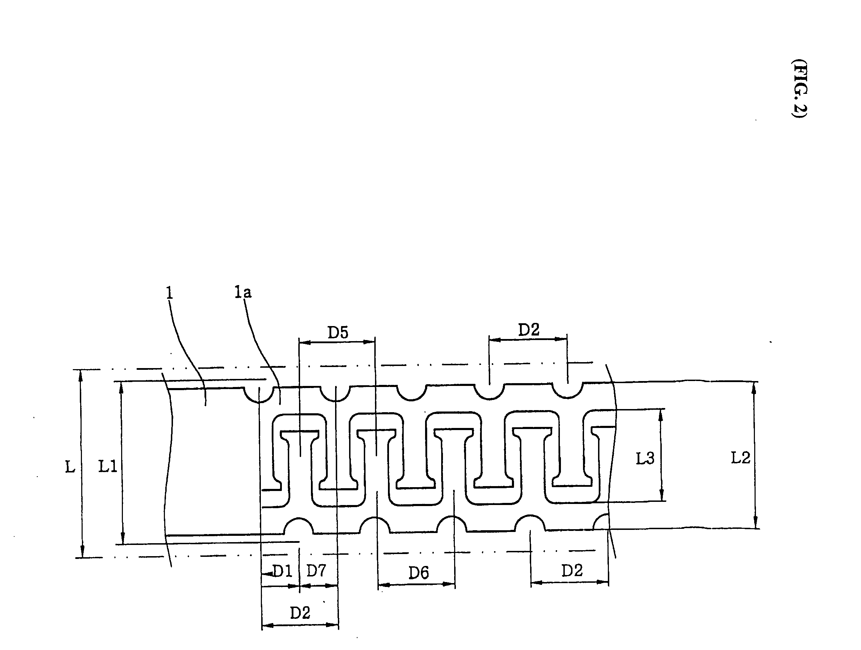

Figure 2 is a view illustrating a stator core fabricated based on the conventional art;
Figure 3 is a view illustrating an apparatus for fabricating a stator core of an alternator for a vehicle according to the present invention; and
Figure 4 is a view illustrating a stator core fabricated according to the present invention.

### DETAILED DESCRIPTION OF THE PREFERRED EMBODIMENTS

The embodiments of the present invention will be explained with reference to the accompanying drawings.

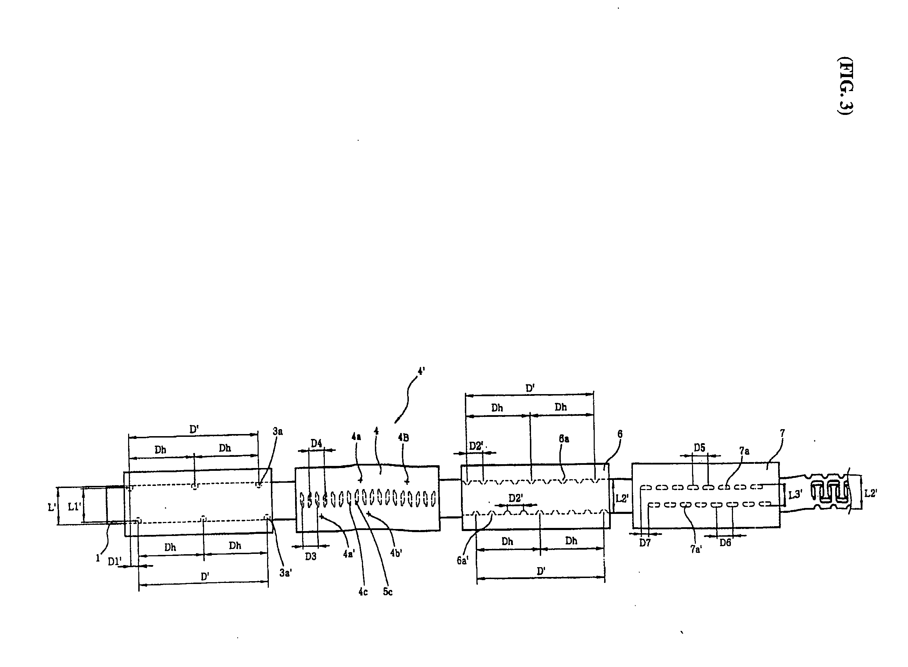

Figure 3 is a view illustrating an apparatus for fabricating a stator core of an alternator for a vehicle according to the present invention. As shown therein, a progressive mold apparatus 2 includes a position hole formation mold 3 having upper and lower position hole punches 3a and 3a' which form three position holes at both sides, a first blank formation mold 4 formed of a first blank mold 4 having left and right blank formation punches 4c and 5c for forming 18 blanks in a vertical direction at a certain distance with respect to pilot pins 4a, 4b, 4a' and 4b' which fix the position of the material 1, a side cutting mold 6 formed in font of the first blank formation mold 4 and having upper and lower side cutting punches 6a and 6b for forming six position holes in both sides of the material and removing a part of both sides, and a second blank formation mold 7 formed in front of the side cutting mold 6 and having upper and lower blank formation punches 7a and 7a' for forming the material 1 into the finished products 1a and 1b in a shape of the stator core.

Here, in the upper and lower position hole punches 3a and 3a' of the position hole formation mold 3, three position hoes are formed at a sub-position hole interval Dh which divides the position hole interval D' into three parts with respect to the position hole width L1' of the material 1, and the lower position hole punch 3A' is formed at an eccentric distance D1 compared to the upper position hole punches 3a and 3a'.

In addition, the radius of the position hole formed with respect to the center of the position hole width L1' includes a certain value corresponding to a certain size which is deviated from a side end portion of the initial width L', namely, the distance between the position hole width L1' and the initial width L' is smaller than the radius of the position hole.

The pilot pins 4a, 4b, 4a', 4b', 5a, 5b, 5a', and 5b' formed in the first blank mold 4 of the first blank formation mold 4' are formed in a portion inserted into two position holes among the position holes of the material 1, and the left and right blank punches 4c and 5c are formed in such a manner that the second blank distance D4 is formed between the first blank distance D3 based on the first and second blank distances D3 and D4 for thereby totally forming 18 blanks.

The upper and lower side cutting punches 6a and 6a' of the side cutting mold 6 remove the widths L'-L2' of both sides of the material for thereby forming a last width L2' smaller than the position hole width L1' which is a distance to the center of the position hole formed in both sides, and three position holes are formed at the same punching distance D2' in the sub-position hole distance Dh of the position hole portion 3, and nine position holes are formed at a position hole distance D'.

In addition, the upper and lower blank formation punches 7a and 7a' of the second blank formation mold 7 form a vertical form based on the same second blank distances D5 and D6 in the upper and lower portions between the vertical blanks formed in the first blank formation mold 4', and the lower blank formation punch 7a' is formed at an eccentric distance D7' compared to the upper blank formation punch 7a.

The operation of the present invention will be explained with reference to the accompanying drawings.

First, when the material 1 having an initial width L is transferred to the progressive mold apparatus 2, in a first step, three position holes are formed at a sub-position hole distance Dh in such a manner that the upper and lower portions of both sides are formed at an eccentric distance D1' based on the punches 3a and 3a' based on the position hole width L1' beyond the position hole formation mold 3. The position of the material 1 is fixed by the pilot pins 4a, 4b, 4a' and 4b' inserted into the position holes based on the first blank mold 4 of the first blank formation mold 4', and 18 vertical blanks are formed by the left and right blank punches 4c. In a third step, the initial width L' and the last width L2' which are a side distance are removed in such a manner that both sides have a last width L2' based on the upper and lower side cutting punches 6a and 6a' of the side cutting mold 6, and three holes are formed at the same hole distance D2' between the sub-position distance Dh, and nine position holes are formed at a position hole distance D'. In a fourth step, the blanks are formed in the upper and lower portions of the vertical blanks formed in the second step based on an eccentric distance D7' and the separation width L3' , and first and second finished products 1a and 1b are fabricated in a state that the last width L2' is removed from the initial width L' in the material 1.

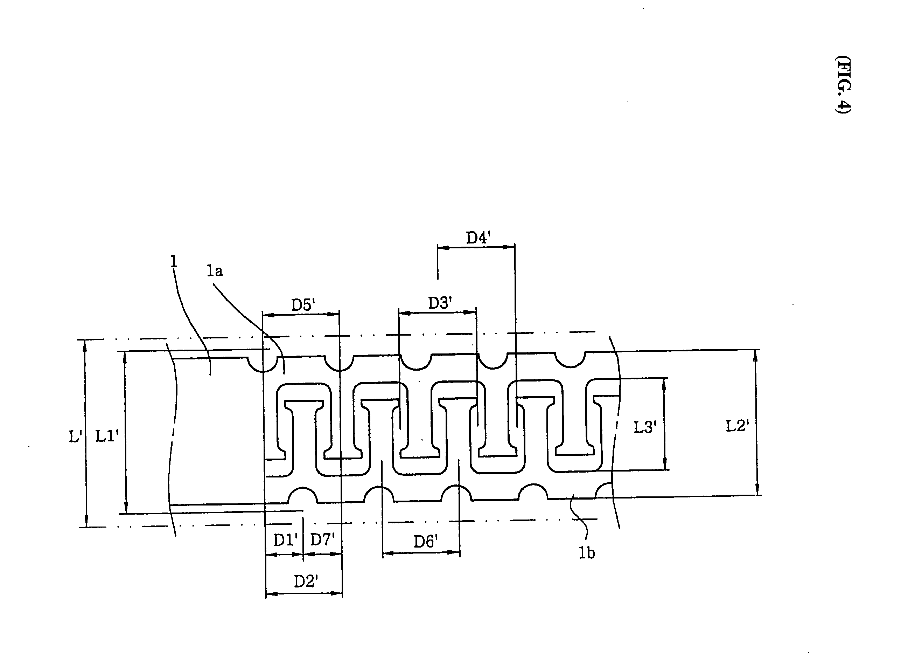

As shown in Figure 4, in the first and second finished products 1a and 1b, even when the eccentric distances D1 and D7 are formed at a portion which is 1/2 of the first and second blank distances D3, D4, D5 and D6. The first and second blank distances D3 and D4 are formed at left and right portions of the center of the position hole, and the second blank distances D5 and D6 are formed between the position holes, the position hole is formed in two steps of the first and third steps. The diameter of the position hole exceeds the initial width L' of the material 1, and the initial width L' and the position hole width L1' of the material 1 are 22.0mm and 20.0mm. In this case, the last width L2' is 18.8mm. Therefore, the loss of the material which occurs due to the formation of the position hole at both sides is decreased to 14.5% with respect to one stator core which is fabricated in a condition that the loss of the material 1 is about 3.2mm(22.0mm(L')-18.8mm(L2').

As described above, in the present invention, it is possible to form a position hole at both sides of a material based on two steps for thereby decreasing about 50% of loss of the material by decreasing the size of the initial width of the material, so that it is possible to enhance the productivity of the products by decreasing the number of the fabrication processes using the progressive mold apparatus.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In an apparatus for fabricating a stator core of an alternator for a vehicle which includes a progressive mold apparatus formed of a position hole formation mold for forming a position hole at both sides of a material, a first blank formation mold for forming a vertical blank in the material transferred from the position hole formation mold, a side cutting mold for removing both sides of the material transferred from the first blank formation mold and a second blank formation mold for fabricating a finished product by forming a horizontal blank in an upper and lower portions of the material transferred from the side cutting mold, an apparatus for fabricating a stator core of an alternator for a vehicle, comprising:
upper and lower position hole punches formed in such a manner that the position hole formation mold forms three position holes at both sides of the material; and
upper and lower side cutting punches formed in such a manner that the side cutting mold forms six position holes at a regular interval between three position holes.

2. The apparatus of claim 1, wherein said progressive mold apparatus includes:
a position hole formation mold having upper and lower position hole punches for forming a position hole in a material transferred;
a first blank formation mold including a first blank mold formed of pilot pins formed in front of the position hole formation mold for fixing the position of the material and left and right blank formation punches which form eighteenth blanks in a vertical direction at a regular interval therebetween;
a side cutting mold having upper and lower side cutting punches formed in front of the first blank formation mold for re-forming a position hole at both sides of the material and removing a part of both sides of the same; and
a second blank formation mold having upper and lower blank formation punches formed in front of the side cutting mold for forming the material as finished products in a stator core shape.

3. The apparatus of claim 2, wherein said upper and lower position hole punches of the position hole formation mold form three position holes at a sub-position hole distance Dh which divides a distance D' of the position hole into three parts with respect to a position hole width L1' of the material.

4. The apparatus of claim 3, wherein a radius of the position hole formed with respect to the position hole width L1' is determined in such a manner that the radius exceeds a side end portion of the initial width L'.

5. The apparatus of claim 2, wherein said pilot pins of the first blank mold which forms the first blank formation mold are inserted into the position holes formed in three portions of both sides and are formed at a sub-position hole distance Dh by two for fixing the material, and the left and right blank formation punches formed in the center portion form eighteen blanks in such a manner that the second blank distance D4 is positioned between the first blank distance D3.

6. The apparatus of claim 2, wherein said upper and lower side cutting punches of the side cutting mold remove widths L'-L2' of both sides of the material for thereby obtaining a last width L2' which is smaller than the position hole width L1' which is a distance to the center of the position hole formed in both sides and form three position holes at the same punching distance D2' within a sub-position hole distance Dh of the position hole for thereby forming nine position holes at a position hole distance D'.

7. The apparatus of claim 2, wherein said upper and lower blank formation punches of the second blank formation mold form blanks at the same second blank distances D5 and D6 in the upper and lower portions between the vertical blanks formed based on the first blank formation mold, and the lower blank formation punch is formed at an eccentric distance D7' compared to the upper blank formation punch.

8. A method for fabricating a stator core of an alternator for a vehicle, comprising:
a first step in which a material having an initial width L is transferred to a progressive mold apparatus and moves to a position hole formation mold, and three position holes are formed in the upper and lower portions of both sides by punches based on a position hole width L1' at a sub-position hole distance Dh based on an eccentric distance D1';
a second step in which the material is positioned at the first blank mold of the first blank formation mold and is fixed by pilot pins inserted into the position holes for thereby forming eighteen blanks based on the left and right blank punch;
a third step in which the initial width L'-last width L2' which is a side distance is removed in such a manner that both sides of the material have a last width L2' based on the upper and lower cutting punches of the side cutting mold for thereby forming three holes at the same position hole distance D2' between the sub-position hole distance Dh, so that nine position holes are formed at the position hole distance D'; and
a fourth step in which blanks are formed in the upper and lower portions of the vertical blank formed in the second step based on an eccentric distance D7' and a separation width L3', and first and second finished products are fabricated in a state that the width of the material is removed from the initial width L' by the last width L2'.
